Europäisches Patentamt

European Patent Office

Office européen des brevets

(11) Publication number: **0 472 025 A2**

# EUROPEAN PATENT APPLICATION

(21) Application number: **91112971.6**

(22) Date of filing: **01.08.91**

(51) Int. Cl.⁵: **G06F 9/30**

(30) Priority: **23.08.90 JP 222203/90**

(43) Date of publication of application:
**26.02.92 Bulletin 92/09**

(84) Designated Contracting States:
**DE FR GB IT**

(71) Applicant: **HITACHI, LTD.**
**6, Kanda Surugadai 4-chome**
**Chiyoda-ku, Tokyo 101(JP)**

(72) Inventor: **Miyazaki, Takeshi**
**E11 Lawrence Apts. West Drive**
**Princeton, N.J. 08540(US)**
Inventor: **Hotta, Atsuo**
**3-931-21, Kohan**
**Higashiyamato-shi, Tokyo(JP)**
Inventor: **Sasaki, Hisao**
**381, Canner Street No.3**
**New Haven, CT 06511(US)**

(74) Representative: **Strehl, Schübel-Hopf,**
**Groening**
**Maximilianstrasse 54 Postfach 22 14 55**
**W-8000 München 22(DE)**

(54) **A microprocessor.**

(57) A microprocessor for executing a fixed length instruction in a program memory comprises a bus interface unit (17) connected to an execution unit (2) and an instruction control unit (3). The bus interface includes an aligner (27) which sorts out each instruction from an aggregate of one instruction and a part of the next instruction contained in the 32-bit data supplied through the data input/output path (20). The bus interface makes the number of bits of the fixed length instruction supplied to the instruction control unit smaller than the number of bits of data concurrently transferred to and from the execution unit (2). A system for using the microprocessor improves the utilization efficiency of memory that stores program.

FIG.3

## Background of the Invention

### Field of the Invention:

The present invention relates to a microprocessor and more particularly to an architecture of a RISC (reduced instruction set computer) type microprocessor, and provides a technique for more effectively controlling an apparatus in which the microprocessor is incorporated.

### Description of the Prior Art:

Numerous efforts have been made to enhance overall microprocessor system performance and to more easily enable system programs such as compilers and operating systems to be written, by upgrading the microprocessor functions and providing as many instruction sets, addressing modes and data types as possible. This, however, has resulted not only in an increased complexity of microprocessor and a longer period for its development, but also in a longer processing time taken by the control circuit, thereby giving rise to a problem of one being of performance degradation of the microprocessor. Under these circumstances, a RISC concept has been proposed for solving this problem by simplifying the instructions set. This concept is based on the fact that the instructions that are most frequently executed, as close examinations revealed, are mostly simple instructions, such as LOAD and STORE. In order to improve microprocessor efficiency it is considered important to increase the speed of executing these simple instructions.

Conventional RISC type microprocessors employ a fixed-length instruction format, say 32 bits long, as mentioned in the "CY7C600 Family Users' Guide" (Cypress Semiconductor) 1988, p 2-18 to p 2-29. The instruction format described in this literature can have up to 128 kinds of operation codes. However, 34 percent of these codes or 44 kinds of operation codes are not defined.

### Problems to be Solved by the Invention:

Since a RISC processor bases itself on an architecture primarily intended to reduce the number of instructions for high speed of instruction execution, it can safely be said of the RISC processors in general that the number of undefined operation codes in the instruction set tends to increase.

The presence of many undefined operation codes means that there are many virtually useless bit strings in each operation code. This deteriorates the code efficiency of object programs, or, in other words, lowers the utilization efficiency of memory. No provision has been made to compensate for this inefficiency in the conventional microprocessors. The code efficiency of the RISC processors is generally said to be lower than 70 percent of that of CISC (complex instruction set computer) type processors. In the program memory, therefore, the area that is virtually wasted become relatively large, which, as the inventors have found, causes the following problems. In applications where on-board memories with limited capacity or on-chip program memories on the processors are used, such an inefficient utilization of memory will result in insufficient memory or make it impossible to up-scale the circuit during system design.

The object of this invention is to provide a microprocessor which improves the utilization efficiency of memory that stores program.

This and other objects and novel features of this invention will become apparent from the following description taken in conjunction with the accompanying drawings.

### Brief Summary of the Invention

One feature of the invention is that in a microprocessor in which instructions are decoded and processed by an instruction control unit having a constant word length, the instruction word length is set shorter than the maximum number of bits in unit data, i.e., the maximum word length of data that can be handled by an execution unit. In other words, the instruction control unit decodes instructions made up of a constant number of bits, which are smaller in number than the maximum number of bits contained in unit data that can be handled by the execution unit.

Another feature of the invention is that for the data transfer to and from the program memory and data memory, a bus interface unit may be provided to make the number of bits of each instruction supplied to the instruction control unit smaller than the number of bits of data transferred to and from the execution unit.

Yet another feature is that to prevent the data and instruction access control performed by the instruction control unit from becoming complex, the bus interface unit may be provided with an interface path that is commonly used for input and output of data and for input of instruction. It is preferred from the standpoint of improved efficiency of data transfer and of data and instruction access that the interface path also have a width large enough to parallelly transfer data consisting of the maximum number of bits of unit data that can be handled by the execution unit.

To make it possible to take in instructions by using the entire width of the interface path, which is wider than the instruction word length, the following means may be added. That is, the instruction control unit is provided with an instruction prefetch queue which accumulates instruction to be given to the instruction decoding means, and the bus interface unit is provided with a means to sort out each instruction from an aggregate of one instruction and a part of another instruction contained in information entered through the interface path.

To ensure flexibility of address arrangement on the memory used for storing data and instruction, the instruction control unit may manage data and instructions in the same address space.

While the data memory and program memory connected to the interface path may be located on a separate chip other than the microprocessor chip, these memories may better be arranged on the microprocessor chip when high-speed access to it is to be realized.

In an architecture like a RISC where the number and kind of operation codes is reduced to increase the instruction execution speed, the shorter instruction word length than the data word length acts to reduce the number of virtually useless bit strings in the operation code, as compared with a case where the instruction and data word lengths are set equal. This, in turn, enhances the utilization of memory for storing programs.

## Brief Description of the Drawings

Fig. 1 is a block diagram of a microprocessor formed in accordance with one embodiment of this invention;

Fig. 2 is a block diagram showing an example detail of the microprocessor of Fig. 1;

Fig. 3 is a logic circuit diagram showing one example logic contained in the data bus interface unit of Fig. 2 for sorting out bits from a 32-bit input;

Fig. 4 is a schematic diagram showing the process of sorting out and feeding the instructions according to the bit sorting logic;

Fig. 5 is one example format of the instruction;

Fig. 6 is an address map showing the program memory and the data memory located in a common address space;

Fig. 7 is an address map showing the program memory and the data memory located in separate address spaces;

Fig. 8 is one example block diagram showing a microprocessor that incorporates the data memory and the program memory;

Fig. 9 is one example block diagram showing a microprocessor with a dedicated data bus interface unit and a dedicated program bus interface unit;

Fig. 10a is a timing diagram showing the instructions of Fig. 10b, sorted as in Fig. 4, during their communication through the circuit elements of Fig. 3;

Fig. 11 is a flowchart illustrating the processing steps of the operation of the aligner of Fig. 3;

Fig. 12 is a detailed schematic diagram of an alternative embodiment of an aligner as may be employed in the circuit diagram of Fig. 3; and,

Fig. 13 is a timing diagram showing the progress of an instruction set through the aligner of Fig. 12; and,

Fig. 14 is schematic diagram of an aligner as may be used in the circuit of Fig. 3.

## Detailed Description of the Preferred Embodiments

Referring now to the drawings wherein the showings are for purposes of illustrating the preferred embodiments of the invention only and not for purposes of limiting same, the FIGURES show a microprocessor using an RISC instruction set wherein the instructions are communicated through the processor with a lesser word length than a data unit word length.

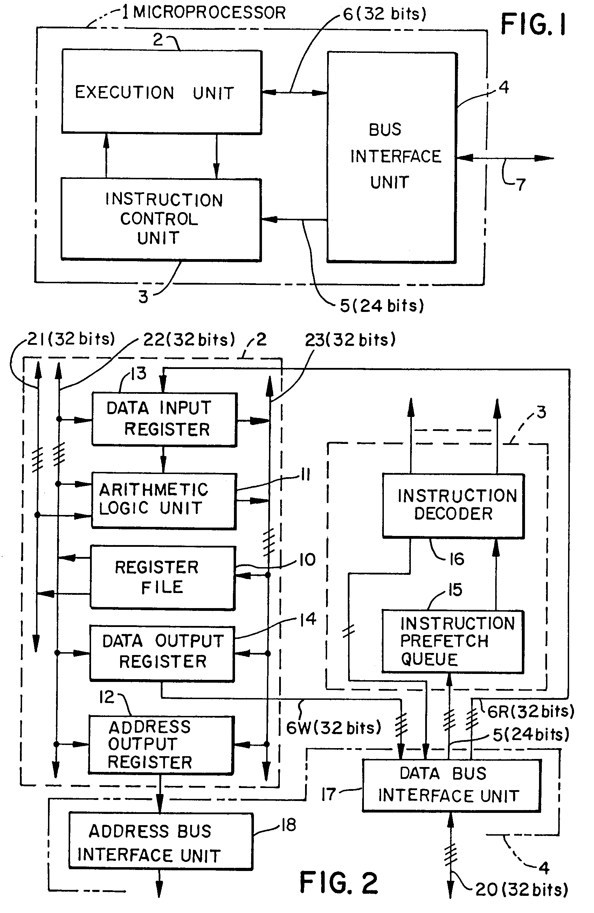

Fig. 1 shows a microprocessor formed in accordance with one embodiment of this invention.

The microprocessor 1 of Fig. 1 has an RISC type architecture, in which the instruction set is comprised of a small number of frequently used instructions with relatively short execution times, such as LOAD and STORE, in order to increase the overall execution speed of instructions. As to an instruction requiring complex processing, a plurality of relatively simple instructions contained in the instruction set are combined to perform the processing equivalent to the complex instruction. Although the execution time of such an instruction with a low frequency of use is long, the ratio in execution frequency of the simple instructions with relatively short execution times to the whole instructions is high, so that the overall instruction execution speed in the microprocessor as a whole is increased.

The microprocessor 1 includes an execution unit 2, an instruction control unit 3 to decode instructions and control the execution unit 2, and a bus interface unit 4 connected to the execution unit 2 and the instruction control unit 3 and also interfaced with external circuits. These units are all preferably formed in a single semiconductor silicon chip.

The number of bits in each instruction decoded and processed by the instruction control unit 3, i.e., the instruction word length, is set constant like other general RISC type microprocessors.

Most importantly, though, in Fig. 1, the word length of instructions processed by the instruction control unit 3 is set smaller than the maximum number of bits of unit data, i.e., the maximum word length of data, that can be simultaneously transferred to and from the execution unit 2. For example, when the maximum word length of data is 32 bits, the instruction word length is set at 24 bits. Other data/instruction word length combinations are of course within the scope of the invention. The bus interface unit 4 gives instructions to the instruction control unit 3 through a 24-bit internal bus 5 and also transfers data to and from the execution unit 2 through a 32-bit internal bus 6. The maximum word length of unit data that can be handled by the execution unit 2 is determined by the maximum number of bits that can be entered into an arithmetic logic unit and registers contained in the execution unit 2 or by the width in bits of the internal bus of the execution unit 2.

In Fig. 1, when the input and output of data and the input of instructions are carried out through a common external data bus 7, the external data bus 7 may use an arbitrary number of bits, such as 32 bits or 64 bits. Suppose the external data bus 7 is 64 bits wide. When information taken in 64 bits at a time through the external data bus 7 is data, the bus interface unit 4 divides the data into two high-order and low-order sections of 32 bits each and transfers the data 32 bits at a time to the execution unit 2. When the information entered 64 bits at a time is an instruction, the instruction is divided into 24-bit sections and at the same time odd bits are prefetched by the instruction control unit 3. The logic necessary for these processings is contained in the last 24-bit section containing the odd bits.

Fig. 2 shows one detailed example of the microprocessor of Fig. 1.

In Fig. 2, denoted 10 is a register file, 11 an arithmetic logic unit, 12 an address output register, 13 a data input register, 14 a data output register, 15 an instruction prefetch queue, 16 an instruction decoder, 17 a data bus interface unit, and 18 an address bus interface unit.

The data bus interface unit 17 is connected to the external data bus 7 of Fig. 1 through a 32-bit data input/output path 20, which is commonly used for input/output of data and for input of instruction, and through a data input/output buffer (not shown) connected with the path 20. In this example, the external data bus 7 is set to 32 bits. The 32-bit internal bus 6 used for data transfer between the bus interface unit 4 and the execution unit 2 is shown in Fig. 2 as a read bus 6R and a write bus 6W, each with a 32-bit bus width. The instructions taken through the data input/output path 20 into the data bus interface unit 17 are fed through a 24-bit internal bus 5 to the instruction prefetch queue 15 where they are accumulated. The instructions that are successively read out from the instruction prefetch queue 15 are decoded by the instruction decoder 16 to generate various control signals. The addresses of the instructions to be prefetched are held by a program counter allocated, for example, in the register file 10. Other control logics for instruction execution sequence and interrupt control and for using internal calculation results for the control are not particularly shown in Fig. 2.

The register file 10 is used as an accumulator, an address counter and a general-purpose register. The arithmetic logic unit 11 may include, for instance, an arithmetic and logic unit (ALU) for data calculation and an arithmetic unit for address calculation. The computed address is output to the external circuit through the address output register 12. The execution unit 2 has 32-bit internal buses 21, 22, 23, through which data is transferred between internal blocks.

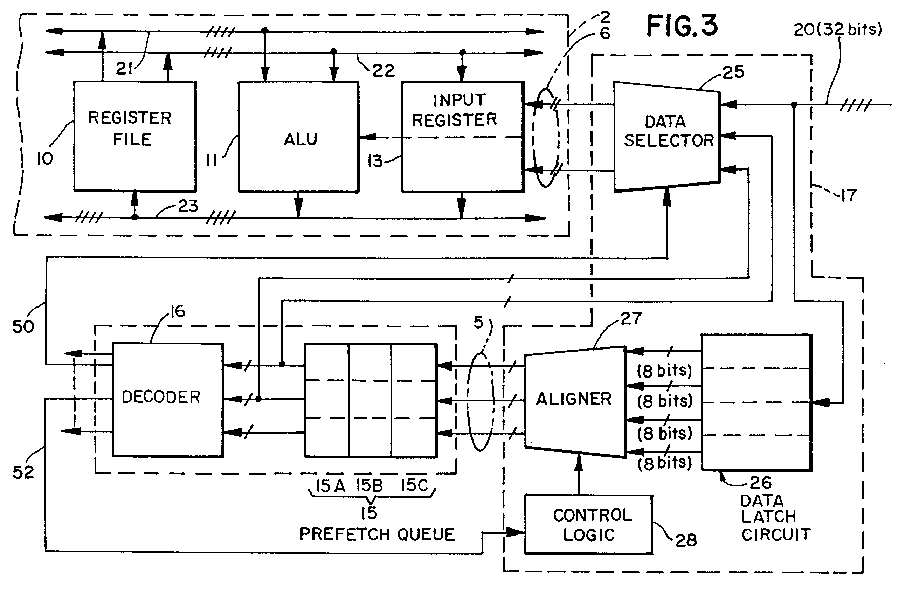

Fig. 3 shows one example logic circuit diagram in the data bus interface unit 17 for distributing a 32-bit input.

In the data bus interface unit 17, the 32-bit input/output path 20 is connected to the input of a data selector 25 and to the input of a data latch circuit 26.

The data selector 25 operates as follows when the 32-bit data supplied from outside is to be processed by the execution unit 2. According to an output control signal 50 from the instruction decoder 16, the data selector 25 selects the input 32-bit data, which is to be processed by the execution unit 2, and sends the selected data to the data input register 13.

Alternatively, the data selector 25, according to the output control signal 50 from the instruction decoder 16, gives to the data input register 13 immediate values of instructions prefetched by the instruction prefetch queue 15. Further, the data selector 25 has a logic that swaps data between the 16 high-order bits and the 16 low-order bits of the 32-bit input data and allows the changed 32-bit input data to be supplied to the data input register 13. It also has a logic that allows an immediate value fed from the instruction prefetch queue 15 to be supplied to the 16 high-order bits or 16 low-order bits of the data input register 13. The control of these logics is performed by an output control signal 50 from the instruction decoder 16.

The data latch circuit 26 holds 32-bit data and outputs the data parallelly to an aligner 27. The aligner 27 sorts out each instruction from an aggregate of one instruction (24 bits) and a part of the next instruction (8, 16 or 24 bits), contained in the 32-bit data supplied through the data input/output path 20, according to the data arrangement, and distributes the sorted data to the instruction prefetch queue 15. In this embodiment, the prefetch queue 15 consists of an FIFO (first-in-first-out) register having three memory stages of 24 bits each. The sorting control on the aligner 27 and the read/write control on the instruction prefetch queue 15 are performed by a control logic 28 that receives an output control signal 52 from the instruction decoder 16.

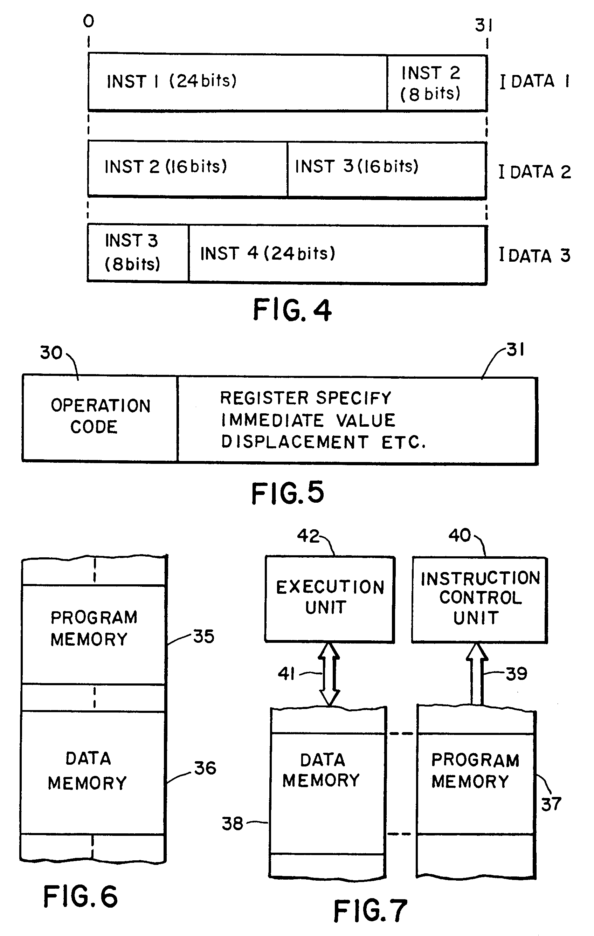

The control logic 28 determines if information taken into the data bus interface unit 17 through the data input/output path 20 is an instruction or not, by checking the control signal output from the instruction decoder 16 which represents an instruction prefetch cycle. When the control signal indicates the instruction prefetch cycle, the control logic 28 enables the aligner 27 to control the data alignment by sorting out each instruction from an aggregate of instruction and parts thereof, taken from the data path 20. In synchronism with this processing, the control logic 28 controls the read/write operation on the instruction prefetch queue 15. For example, when instruction data IDATA1 (32 bits) of Fig. 4 is taken from the latch circuit 26 into the aligner 27, the aligner 27 first separates and outputs an instruction INST1 made up of 24 low-order bits. The instruction prefetch queue 15 receives the instruction INST1 and stores it in the memory stage 15A. Then, the aligner 27 picks up from latch 26 and outputs a part of the next instruction INST2 contained in the 8 high-order bits of the instruction data IDATA1. The instruction prefetch queue 15 receives the part of the next instruction INST2 and then stores it in the memory stage 15B. Next, when the instruction data IDATA2 (32 bits) is taken in, the aligner 27 first picks up and outputs the remaining 16 bits of the second instruction INST2 contained in the 16 low-order bits of the instruction data. The instruction prefetch queue 15 receives the remaining 16 bits of the instruction INST2 and stores it in the memory stage 15B. Then, the aligner 27 picks up and outputs a part (16 bits) of the next instruction INST3 contained in the 16 high-order bits of the instruction data IDATA2. The instruction prefetch queue 15 receives the part of the third instruction INST3 and stores it in the memory stage 15C. As shown in Fig. 4, there is a certain regularity to the manner in which the instructions are separated and fed from the 32-bit instruction data. So, the control logic 28 performs the data sorting control according to this regularity. In this way, the instructions contained in the 32-bit instruction data are successively sorted and prefetched into the instruction prefetch queue 15. These prefetched instructions are all 24 bits long so that the instruction decoder can decode the instructions.

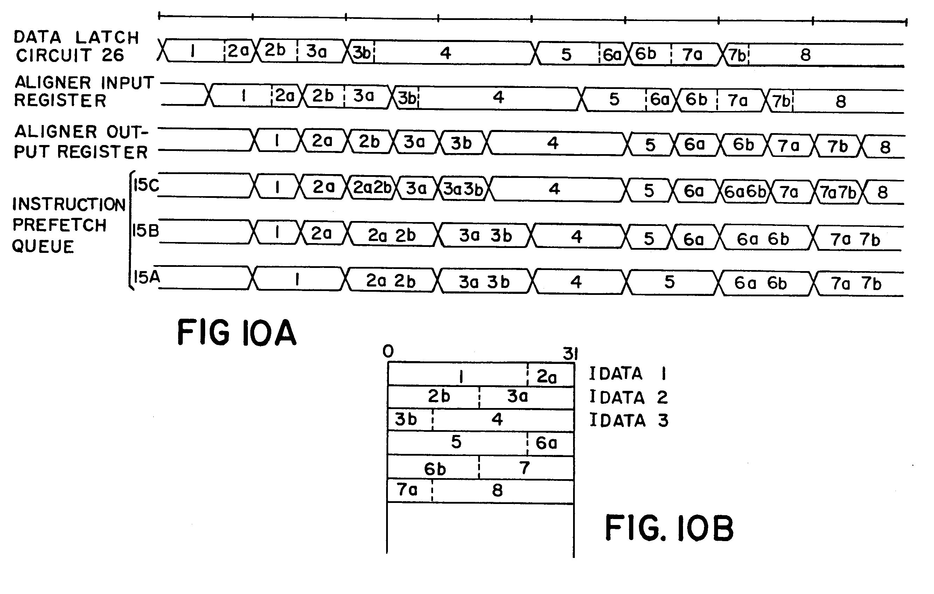

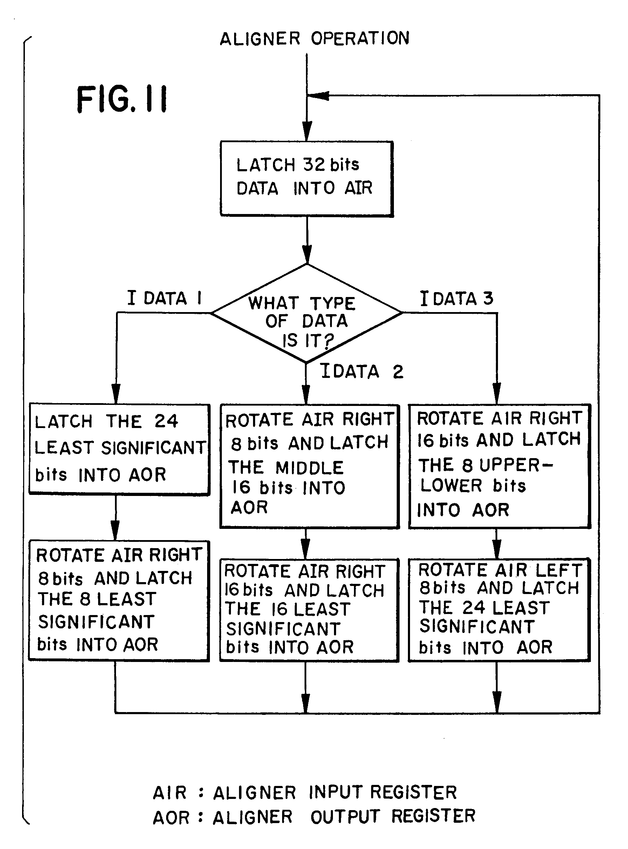

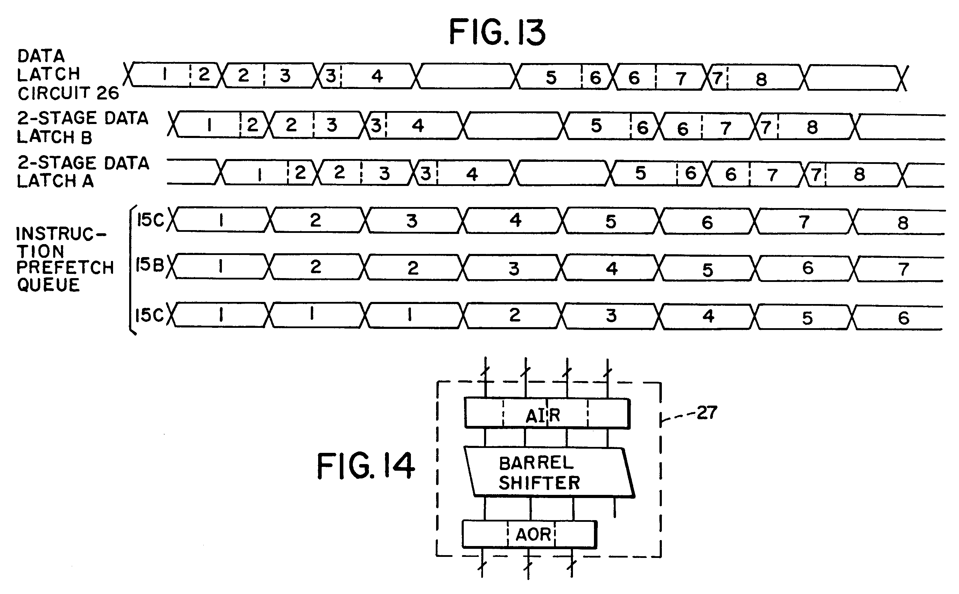

Figs. 10 and 11 provide a more detailed illustration of the selective alignment of the 32-bit word received in the data latch circuit 26 (Fig. 3) so that the instruction may be properly communicated to the prefetch queue 15 with only a smaller, 24-bit bus communication. More particularly, the aligner 27 will at least comprise an input register, a shifter (Fig. 14), and an output register in order to properly communicate an instruction from the latch circuit 26 to the prefetch queue 15. With particular reference to Fig. 11, it can be seen that when the data is latched into the aligner input register the control logic 28 identifies whether it is of a form of IDATA1, IDATA2, or IDATA3 (note Figs. 4 and 10b). When it is the form of IDATA1, the lowermost 24 bits will be a single instruction INST1 while the upper 8 bits will be a portion of a next instruction INST2, 2a, when it is the form of IDATA2, the lowermost 16 bits will be the higher 16 bits of the second instruction INST2, 2b and therefore must be combined with the uppermost 8 bits 2a from IDATA1. The uppermost 16 bits of IDATA2 comprise the 16 lower bits of the third instruction, INST3, 3A, and an instruction of the form IDATA3 will have as its lowermost 8 bits, the 8 higher bits of INST3, 3B, while the uppermost 24 bits will comprise a complete instruction for the fourth instruction, INST4, 4. Since in the particular example being discussed, all of the instructions will be of the three forms, IDATA1, IDATA2, IDATA3, then they can be aligned with repetitive regularity after determination of what type of data form the instruction is in.

Continuing with reference to Fig. 11, when the instruction is of the form IDATA1, the 24 least significant bits are latched into the aligner output register and then the contents of the aligner input register are rotated by a barrel shifter (Fig. 14) 8 bits to the right and the 8 least significant bits are then latched into the aligner output register. As noted above, since the queue is a first-in-first-out prefetch queue, the 24 least significant bits of IDATA1 would be latched into the memory stage 15A. After the rotation of the contents of the input register by the barrel shifter so that the 8 least significant bits comprising the 8 least significant bits of INST2 are rotated and stored into the least significant bits of the aligner output register, then these 8 bits can then be latched into the least significant bits of the memory stage 15B. When the data is of the form IDATA2, the contents of the aligner input register are rotated right 8 bits and the middle 16 bits of the aligner input register are then latched into the 16 most significant bits of the aligner output register. One should bear in mind, that the 8 most significant bits of the shifter need not be connected to the aligner output register since the output register will only communicate 24 bits to the prefetch queue. Accordingly, upon completion of the first latch into the aligner output register of IDATA2, the INST2, will be completely received into the memory stage 15B of the queue 15. Since the upper 16 bits of IDATA2 comprises the lower 16 bits of INST3, the second rotation of the contents of IDATA2 data occurs by rotating them right 16 bits so that the 16 least significant bits of the aligner input register can be latched into the aligner output register. After completion of this stage, the aligner output register can then be latched into the 16 least significant bits of the memory stage 15C so that the 16 least significant bits of INST3 are properly stored in the memory stage 15C. Where the instruction data is of the form IDATA3, the 8 least significant bits of IDATA3 comprise the 8 most significant bits of INST3. By rotating the aligner input register contents 16 bits to the right, these bits can then be latched into the aligner output register. With reference to Fig. 11, these bits are referred to in the figure as the 8 upper-lower bits, which are intended to comprise bits 16-23 after rotation. After completion of this latching, it can be appreciated that memory stages 15A, 15B, 15C will respectively include the three instructions INST1, INST2, INST3. INST1 can then be communicated from the memory stage 15A to the instruction decoder 16 and memory stage 15C will then become available by respectively moving up INST2 and INST3 into memory stages 15A and 15B, respectively, as would occur in a FIFO queue. INST4 can be latched into the memory stage 15C subsequent to this movement by rotating the AIR contents left 8 bits so the 24 least significant bits of the AIR comprise INST4, which are then latched into the aligner output register. Accordingly, INST4 would then be placed in the memory stage 15C.

A timing diagram particularly illustrating the timing results of this processing is shown in Fig. 10a. The timing diagram is somewhat inconsistent with the above-explanation, which was made for purposes of clarity of illustration, in that the timing diagram of Fig. 10a shows a continuous shifting of the instructions from the prefetch queue in cooperation with the continuous latching of instructions from the aligner output register. Fig. 10a is a more accurate representation of the actual timing and disposition of the queue memory stages in a continuous operation. For purposes of simplicity, INST1 is identified in Fig. 10b as merely 1, while INST2 comprises 2A, 2B, INST3 comprises 3A, 3B, etc.

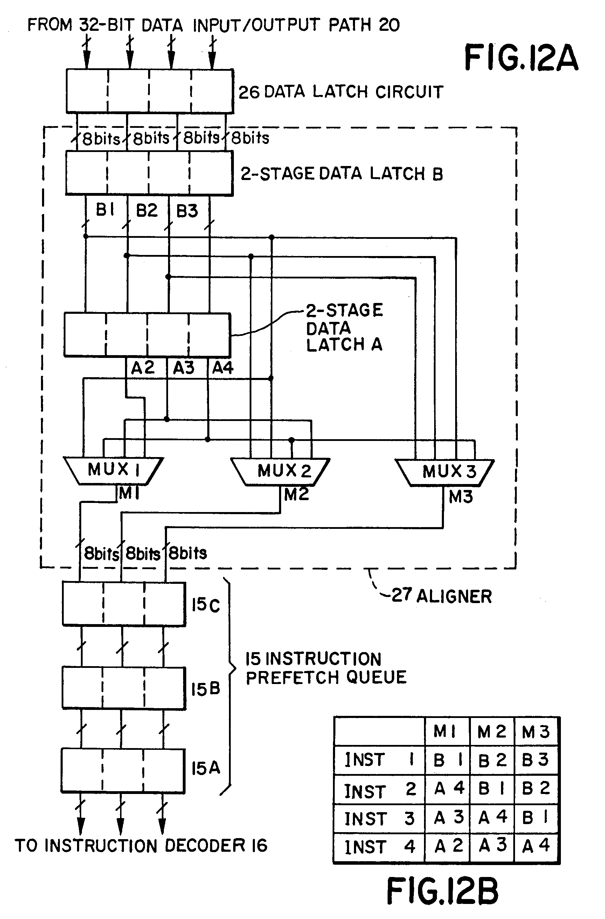

Fig. 12 shows one alternative example block diagram of the aligner 27. The aligner 27 comprises a two stage data latch (latch A, latch B, and multiplexers (MUX1, MUX2, MUX3). The latch A and the latch B are 32 bit register and their outputs A2, A3, A4, B1, B2, and B3 are connected to the multiplexers MUX1, MUX3, and MUX3 as shown in Fig. 12A. Outputs of multiplexers M1, M2, M3 are controlled by the control logic 28 as shown in Fig. 12B.

For example, first when instruction data IDATA1 of Fig. 4 is moved to the latch B from the data latch circuit 26, the multiplexers select B1, B2, and B3, and the aligner 27 separates and outputs the instruction INST1 contained in the least significant 24 bits of the instruction data IDATA1. The instruction prefetch queue 15 receives the instruction INST1 and stores it in the memory stage 15A.

Second, when the instruction data IDATA1 is moved to the latch A and the instruction data IDATA2 is moved to the latch 270B, the multiplexers select A4, B1, and B2, and the aligner 27 separates and outputs the instruction INST2 contained in the most significant 8 bits of the instruction data IDATA1 and the least significant 16 bits of the instruction data IDATA2. The instruction prefetch queue 15 receives the instruction INST2 and stores it in the memory stage 15B.

Third, when the instruction data IDATA2 is moved to the latch A and the instruction data IDATA3 is moved to latch B, the multiplexers select A3, A4, and B1, and the aligner 27 separates and outputs the instruction INST3 contained in the most significant 16 bits of the instruction data IDATA2 and in the least significant 8 bits of the instruction data IDATA3. The instruction prefetch queue 15 receives the instruction INST3 and stores it in the memory stage 15C.

Next, when the instruction data IDATA3 is moved to latch A, the multiplexers select A2, A3, and A4, and the aligner separates and outputs the instruction INST4 contained in the most significant 24 bits of instruction data IDATA3. The instruction prefetch queue 15 receives the instruction INST4 and stores it in the memory stage 15C.

A timing diagram of the above aligner operation is shown in Fig. 13. For purposes of simplicity, INST1 is identified in Fig. 13 as merely 1, INST2 is 2, INST3 is 3, etc.

Fig. 5 shows a format of the instruction executed by the microprocessor 1 of this embodiment.

The instruction consists of an operation code specification field 30 describing the kind of operation to be performed and another specification field 31 representing an operand itself for the operation specified by the operation code or information indicating the location of the operand. The instruction is a fixed length of 24 bits. For example, an operand specified by the location information (including information on the addressing mode described later) contained in the specification field 31 is given through the data selector 25 to the data input register 13. The maximum word length of unit data worked upon by a single instruction depends on the maximum number of bits that can be entered into the arithmetic logic unit and registers contained in the execution unit or on the bit number of bits of the internal bus in the execution unit. In this embodiment, the maximum data word length is 32 bits. The word length of data handled by the microprocessor of this embodiment is not necessarily the maximum word length. For instance, it may be 16 bits long. In that case, the data length need only be expanded from 16 bits to 32 bits.

The operation code specification field 30 may include, in addition to an operation code such as LOAD and STORE, an addressing mode and information on branch conditions for a status flag and a carry generated during computation.

The second specification field 31 may include, as required, a register specification, immediate value specification, and displacement. What kind of information is contained in this field 31 is identified by the information contained in the operation code specification field 30. The information for register specification specifies a register number contained in the execution unit 2; the immediate value directly specifies a value such as data and address; and the displacement includes information used for branch destination address calculation in connection with JUMP and CALL instructions.

The number of bits of the operation code contained in the instruction may or may not be fixed. In this embodiment, the number of bits in the operation code specification field 30 is fixed to 8 bits. The instruction decoder 16 in this embodiment accepts all bits of the instruction output from the instruction prefetch queue 15. Whether the information in the specification field 31 of the instruction received should be decoded or not is determined by a bit contained therein which specifies the decoding. For instance, if an immediate value is contained in the field 31, the information is not decoded and the immediate value is fed to the execution unit 2.

In the microprocessor 1 of this embodiment in which the instruction word length is shorter than the data word length, there may be a case where the immediate value that is also used directly as an operand requires the same number of bits as the data word length. To cope with this situation, the immediate value equal in length to the data can be obtained from two instructions. For example, in the 24-bit instruction format with 8 bits assigned for the operation code specification field 30, a set-high instruction and a set-low instruction are prepared which specify whether the 16-bit immediate value shall be fed to high-order 16 bits or low-order 16 bits of the data input register 13. By executing such instructions successively, it is possible to set the 32-bit immediate value in a desired register. That is, depending on the decoded result of the instruction, it is controlled whether to store the immediate value of the instruction in the high-order 16 bits or low-order 16 bits of the data input register 13. The 16 bits where the data is not stored are set with logic 0 bits. In the next instruction cycle, the 32-bit data first stored in the data input register 13 is transferred to the arithmetic logic unit 11. At the same time, the second half of the immediate value is written into the opposite 16-bit half of the data input register 13 with the 0 bits set to the remaining 16-bit half. This data is similarly output to the arithmetic logic unit 11, which combines the two data to recover the entire 32-bit data and then transfers it to a specified register.

Fig. 6 shows an address map in which a program memory 35 and a data memory 36 are located in the same address space and are each assigned different addresses. In the address space managed by the microprocessor of this embodiment, the data memory 36 and the program memory 35 are arranged in the same space, as shown in Fig. 6. On the other hand, Fig. 7 shows an address map in which a program memory 37 and a data memory 38 are located in separate address spaces. In the address map of Fig. 7, instructions are given to an instruction control unit 40 through a dedicated path 39 and data is given to an execution unit 42 through a dedicated path 41. Hence, with the microprocessor with the address map of Fig. 7, it is virtually impossible to swap the locations between the program memory and the data memory. This kind of address map is applied to an architecture of a dedicated processor such as a digital signal processor with a top priority given to the increased speed of operation, in which instruction fetch and data transfer are parallelly carried out. In the architecture in which the program memory 35 and the data memory 36 are managed by the memory map of Fig. 6, however, there is provided an excellent flexibility in address arrangement of memory locations storing data and instructions. This kind of architecture is suited for multipurpose microprocessors that are controlled by an operation program that may vary according to characteristics and functions of a controlled apparatus.

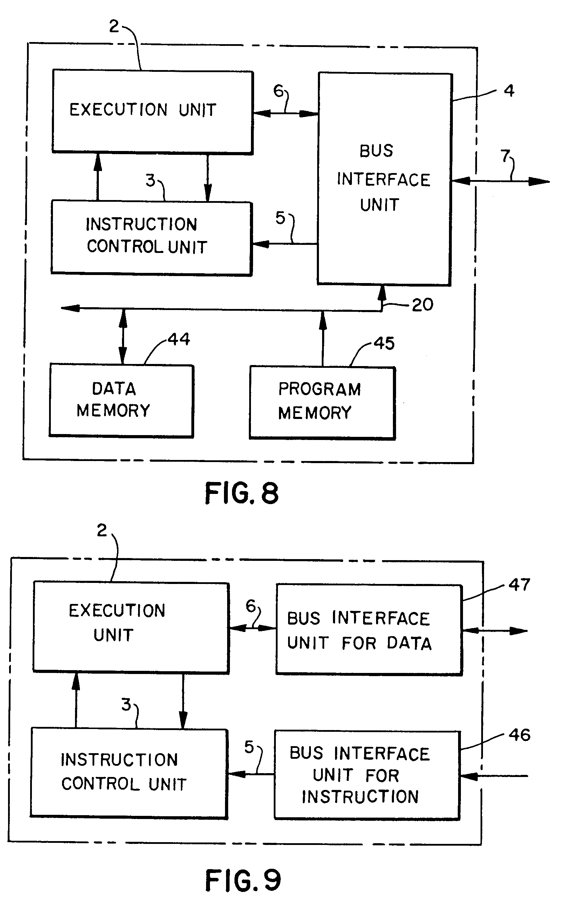

Fig. 8 shows a microprocessor with a configuration similar to that of a single chip microcomputer, in which a data memory 44 containing data to be processed by the execution unit 2 and a program memory 45 containing instructions to be decoded by the instruction control unit 3 are arranged in the same semiconductor chip. In this example, the data input/output terminal of the data memory 44 and the data output terminal of the program memory 45 have a common path equivalent to the transfer path 20, and their address signal input terminals are supplied with address signals through a common address bus. The address map of the data memory 44 and the program memory 45 corresponds to that of Fig. 6.

Fig. 9 shows the configuration of another example of microprocessor, which has a bus interface unit 46 dedicated for instructions and a bus interface unit 47 dedicated for data. The instruction bus interface unit 46 is connected at one end with a data output terminal of the program memory, and the data bus interface unit 47 is connected at one end with the data memory. Addresses are fed to these interface units through a common address bus. In this dedicated configuration, the aligner 27 and the associated control logic 28, that are necessary when the common interface path 20 is used, can be eliminated. On the other hand, the microprocessor as a semiconductor IC circuit in this example has an increased number of external terminals.

The above embodiments offer the following advantages.

(1) In microprocessors with an architecture designed to increase the instruction execution speed by minimizing the number of kinds of operation codes, like an RISC type microprocessor, the word length of instructions decoded and processed by the instruction control unit are fixed to a constant length which is shorter than the maximum number of bits of unit data or the maximum word length of data that can be handled by the processor unit. This reduces the number of virtually useless bit strings in the operation codes, as compared with a case where the instruction word length is set equal to the data word length. As a result, the utilization of memory that stores programs is improved.

(2) In a system containing the RISC type microprocessors, the area in the program memory which was previously virtually wasted becomes relatively small because of the above-mentioned architecture. In applications that use limited capacity on-board memory or on-chip program memory, it is thus possible to avoid problems, which one may encounter during system design, of ending up with insufficient capacity of program memory or having to up-scale the memory circuit.

(3) As a means to make the instruction word length shorter than the data word length, the bus interface unit 4 is provided which, for optimum use of the program memory and data memory, makes the number of bits of instructions supplied to the instruction control unit 3 shorter than the number of bits of data transferred to and from the execution unit 2. Because of this, the number of bits transferred to and from external circuit or data and program memories can be determined arbitrarily without being restricted by the data word length or instruction word length.

(4) The provision in the bus interface unit 4 of the interface path 20 used both for input/output of data and for input of instructions prevents the access control on the data and instructions performed by the instruction control unit 3 from becoming complex.

(5) The interface path 20 is given a sufficient width to transfer parallelly the maximum number of bits of unit data that can be handled by the execution unit 2. This prevents degradation of data transfer efficiency or data and instruction access efficiency.

(6) The instruction control unit 3 is provided with the instruction prefetch queue 15 for accumulating the instructions to be given to the instruction decoder 16. The bus interface unit 4 is provided with the aligner 27 and the control logic 28 that together can sort out each instruction from the aggregate of one instruction and a part of another instruction contained in#the information supplied through the interface path 20, and which distribute the sorted-out instructions to the prefetch queue 15. This arrangement permits efficient input of instructions by utilizing the entire width of the interface path 20 when the interface path 20 is wider than the instruction word length.

(7) Since the instruction control unit 3 manages the data and instructions in the same address space, the flexibility of address arrangement in storing data and instructions in memory can be assured.

(8) The data memory and program memory connected to the interface path 20 are provided on the microprocessor chip, so that high-speed access to these memories is achieved.

In the foregoing, the invention has been described in conjunction with the preferred embodiments. It should be noted, however, that the invention is not limited to the above embodiments alone and that various modifications can be made without departing the spirit and scope of the invention.

For example, while in the above embodiments the instruction words are shown to be 24 bits long and the maximum data words 32 bits long, they may have other appropriate lengths depending on the processing capability of the microprocessor and the configuration of the system to be controlled.

In the preceding embodiments, information# of the instruction contained in other than the operation code specification field is also decoded as required. It is possible to decode only the information contained in the operation code specification field. Furthermore, the bus interface unit is not limited to a circuit that interfaces with external circuits. In a one-chip microprocessor with a built-in program memory and data memory, the bus interface unit may be a circuit that interfaces with the internal bus commonly connected to these memories.

**Claims**

1. A microprocessor for executing a fixed length instruction in a program memory (45) and processing data in a data memory (44), comprising

an execution unit (2),

an instruction control unit (3) including instruction decoding means (16) for decoding the fixed length instruction and means for controlling said execution unit according to the instruction and

a bus interface unit (4) connected both to said execution unit (2) and said instruction control unit (3) and being adapted to make the number of bits of the fixed length instruction supplied to said instruction control unit (3) smaller than the number of bits of data simultaneously transferred to and from said execution unit (2)

wherein at least said microprocessor is in a single semiconductor integrated circuit format.

2. The microprocessor of claim 1, wherein said bus interface unit (4) includes an interface path (20) used commonly for input and output of the data and for input of the instruction.

3. The microprocessor of claim 2, wherein said interface path (20) has a width to parallelly transfer the number of bits of the data to and from the data memory (44) as same as the number of bits of the data simultaneously transferred to and from said execution unit (3).

4. The microprocessor of claim 3, wherein said instruction control unit (3) includes an instruction prefetch queue (15) that accumulates the instruction to be given to said instruction decoding means (3), and said bus interface unit (4) includes means (25) for sorting out each instruction from an aggregate of one instruction and a part of another instruction contained in information supplied through said interface path and means for distributing said instruction sorted by said means to said instruction prefetch queue (15).

5. The microprocessor of any of claims 2 to 4, wherein said data memory (44) and said program memory (45) are both connected to said interface path (20).

6. The microprocessor of any of claims 2 to 5, wherein said instruction control unit (3) manages the instruction and the data in the same address space.

7. The microprocessor of any of claims 1 to 6, wherein said execution unit (2) has a data input register (13), an ALU (11), a register file (10), a data output register (14), address output register (12) and a plurality of internal buses (21...23), and said bus interface unit (4) has a data bus interface (17) and address bus interface (18).

8. The microprocessor of any of claims 1 to 6, wherein said bus interface unit (4) includes a first interface (47) used for input and output of the data and a second interface (48) used for input of the instruction.

9. The microprocessor of claim 8, wherein said execution unit (2) has a data input register (13), an ALU (11), a register file (10), a data output register (14), an address output register (12) and a plural of internal buses (21...23).

10. A microprocessor for execution of an instruction in a program memory (45) and processing data in a data memory (44), comprising

an execution unit (2), and

an instruction control unit (3) including instruction decoding means (16) for decoding the instruction whose word length is constant and smaller than a maximum number of bits of unit data that can be handled by said execution unit (2),

wherein at least said microprocessor is in a single semiconductor integrated circuit format.

11. A microprocessor for executing an instruction in a program memory (45) and processing data in a data memory (44), comprising

an execution unit (2), and

an instruction control unit (3) including instruction decoding means (16) for decoding the instruction whose word length is constant and smaller than a maximum number of bits of the data that can be concurrently transferred to and from the data memory (44) and means for controlling said execution unit according to the instruction,

wherein at least said microprocessor is in a single semiconductor integrated circuit format.

12. The microprocessor of claim 10 or 11, further including

an instruction prefetch queue means (15) for accumulating the instruction to be given said instruction decoding means (16), and

means (25) for sorting out each instruction from an aggregate of one instruction and a part of another instruction contained in information that is entered parallelly in a number of bits greater than a number of bits of the instruction, and means (27) for distributing the instruction by said means to said instruction prefetch queue (15).

13. A microprocessor for executing a fixed length instruction in a program memory (45) and processing data in a data memory (44), comprising

an execution unit (2),

an instruction control unit (3) including instruction decoding means (16) for decoding the fixed length instruction and means for controlling said execution unit (2) according to the instruction, and

a bus interface unit (4) connected both to said execution unit (2) and said instruction control unit (3) and being adapted to make a number m of bits of the fixed length instruction supplied to said instruction control unit (3) smaller than a number n of bits of the data concurrently transferred to and from said execution unit (2), said bus interface unit (4) including an interface path (20) used commonly for input and output of the data and for input of the instruction, said interface path (20) having a width to parallelly transfer a number j of bits of the data to and from the data memory (44),

wherein at least said microprocessor being in a single semiconductor integrated circuit format.

14. The microprocessor of claim 13 wherein $m = 8k$, $n = 8\ell$, $j = 8i$, $k < \ell$, with k, $\ell$ and i being positive integers.

15. The microprocessor of claim 14, wherein $k = 3$, $i = 4$, and $\ell = 4$.

16. A processor particularly adapted for RISC processing of instructions having a first preselected word length and data units having a second preselected word length, the processor including a memory (44, 45), an execution unit (2), and instruction control unit (3) and a bus interface unit (4), all in communicative association, comprising

means (26) for latching an aggregate of the instructions in the bus interface unit (4) wherein the aggregate is sized greater than the first preselected word length,

a storage queue means (15) for storing a plurality of the instructions in the instruction control unit (3), and

means (27) for selectively aligning the aggregate for storage in the queue means and transferring the instructions from the means for latching to the storage queue means in a word length less than the second predetermined word length.

17. The processor of claim 16, wherein the means for selectively aligning comprises an input register sized for storing a word of the second predetermined word length, and an output register sized for storing a word of the first predetermined word length.

18. The processor of claim 17, wherein the means for selectively aligning comprises means for selectively shifting the word of the input register for alignment of a portion of the word with the output register.

19. The processor of any of claims 16 to 18, wherein the memory comprises a data memory (44) storing the data units and a program memory (45) storing the instructions.

20. The processor of claim 19, wherein the data memory (44) and the program memory (45) are disposed for sharing in the same address space.

21. The processor of any of claims 16 to 20, wherein the bus interface unit (4) has an interface path sized for input of at least a word of the second preselected word length.

22. A method of processing data units with an RISC-type instruction set, wherein each instruction is defined as having a first preselected word length and the data units have a second preselected word length, larger than the first preselected word length, comprising

forming a sequence of the instructions in a plurality of words of the second preselected word length,

latching an each of the plurality of words into an aligner,

selectively transferring a portion of the each from the aligner to a queue to form an other sequence of the instructions in an other plurality of words of the first predermined word length, and

concurrently decoding the other plurality of words and processing data units of words of the second predetermined word length in accordance with the decoded instructions whereby improved efficiency of processing is achieved by the transferring and decoding of the shorter instruction word lengths with the processing of the longer data unit word lengths.

**23.** The method of claim 22, including storing the data units and instructions in a shared memory.

FIG. 1

FIG. 2

FIG.3

0                                                         31

| INST 1 (24 bits) | INST 2 (8 bits) | I DATA 1 |

| INST 2 (16 bits) | INST 3 (16 bits) | I DATA 2 |

| INST 3 (8 bits) | INST 4 (24 bits) | I DATA 3 |

## FIG. 4

30                                                         31

| OPERATION CODE | REGISTER SPECIFY IMMEDIATE VALUE DISPLACEMENT ETC. |

## FIG. 5

| PROGRAM MEMORY | 35 |
| DATA MEMORY | 36 |

## FIG. 6

42  EXECUTION UNIT

40  INSTRUCTION CONTROL UNIT

41

39

38  DATA MEMORY

PROGRAM MEMORY  37

## FIG. 7

FIG. 8

FIG. 9

15

DATA LATCH
CIRCUIT 26 ⟩ 1 ⟩2a⟨2b⟩ 3a ⟨3b⟩ 4 ⟩ 5 ⟩6a⟨6b⟩ 7a ⟨7b⟩ 8

ALIGNER INPUT
REGISTER ⟩ 1 ⟩2a⟨2b⟩ 3a ⟨3b⟩ 4 ⟩ 5 ⟩6a⟨6b⟩ 7a ⟨7b⟩ 8

ALIGNER OUT-
PUT REGISTER ⟩ 1 ⟨2a⟩2b⟨3a⟩3b⟨ 4 ⟩5⟨6a⟩6b⟨7a⟩7b⟨8

INSTRUCTION
PREFETCH
QUEUE

15C ⟩ 1 ⟨2a⟩2a2b⟨3a⟩3a3b⟨ 4 ⟩ 5 ⟨6a⟩6a6b⟨7a⟩7a7b⟨8

15B ⟩ 1 ⟨2a⟩ 2a 2b ⟨ 3a 3b ⟩ 4 ⟨ 5 ⟩6a⟨ 6a 6b ⟩ 7a 7b

15A ⟩ 1 ⟨ 2a 2b ⟩ 3a 3b ⟨ 4 ⟩ 5 ⟨ 6a 6b ⟩ 7a 7b

# FIG 10A

| 0 | | 31 | |
|---|---|---|---|
| 1 | | 2a | IDATA 1 |
| 2b | 3a | | IDATA 2 |
| 3b | 4 | | IDATA 3 |
| 5 | | 6a | |
| 6b | 7 | | |
| 7a | 8 | | |

# FIG. 10B

EP 0 472 025 A2

ALIGNER OPERATION

FIG.11

LATCH 32 bits
DATA INTO AIR

WHAT TYPE
OF DATA
IS IT?

I DATA 1

I DATA 3

I DATA 2

LATCH THE 24
LEAST SIGNIFICANT
bits INTO AOR

ROTATE AIR RIGHT
8 bits AND LATCH
THE MIDDLE
16 bits INTO
AOR

ROTATE AIR RIGHT
16 bits AND LATCH
THE 8 UPPER-
LOWER bits
INTO AOR

ROTATE AIR RIGHT
8 bits AND LATCH
THE 8 LEAST
SIGNIFICANT
bits INTO AOR

ROTATE AIR RIGHT
16 bits AND LATCH
THE 16 LEAST
SIGNIFICANT
bits INTO AOR

ROTATE AIR LEFT
8 bits AND LATCH
THE 24 LEAST
SIGNIFICANT
bits INTO AOR

AIR : ALIGNER INPUT REGISTER
AOR : ALIGNER OUTPUT REGISTER

17

# FIG.12A

FROM 32-BIT DATA INPUT/OUTPUT PATH 20

26 DATA LATCH CIRCUIT

8bits 8bits 8bits 8bits

2-STAGE DATA LATCH B

B1 B2 B3

2-STAGE DATA LATCH A

A2 A3 A4

MUX 1 — M1
MUX 2 — M2
MUX 3 — M3

8bits 8bits 8bits

27 ALIGNER

15C
15B
15A

15 INSTRUCTION PREFETCH QUEUE

TO INSTRUCTION DECODER 16

| | M1 | M2 | M3 |
|---|---|---|---|
| INST 1 | B1 | B2 | B3 |
| INST 2 | A4 | B1 | B2 |
| INST 3 | A3 | A4 | B1 |
| INST 4 | A2 | A3 | A4 |

# FIG.12B

18

# FIG. 13

DATA LATCH CIRCUIT 26

2-STAGE DATA LATCH B

2-STAGE DATA LATCH A

INSTRUCTION PREFETCH QUEUE
- 15C
- 15B
- 15C

FIG. 14

AIR

BARREL SHIFTER

AOR

~27

EP 0 472 025 A2